# EUROPÄISCHE PATENTSCHRIFT

(11) **EP 2 269 873 B1**
(45) Veröffentlichungstag und Bekanntmachung des Hinweises auf die Patenterteilung: **17.04.2013**
(21) Anmeldenummer: 10167589.0
(22) Anmeldetag: 28.06.2010
(51) Int. Cl.: B60R 13/04

(54) **Säulenblende mit ortsfest zugeordneter Decklippe**
Pillar trim kit with fixed allocated deck lip
Diaphragme de colonne doté d'une lèvre de recouvrement associée à un lieu fixe

(30) Priorität: 29.06.2009 DE 102009026069
(43) Veröffentlichungstag der Anmeldung: 05.01.2011
(73) Patentinhaber: DURA Automotive Body & Glass Systems GmbH, 58840 Plettenberg (DE)
(72) Erfinder: Gerndorf, Ralf, 57413, Finnentrop (DE); Schulze zur Wiesche, Jochen, 51143, Köln (DE); Bittner, Norfried, 58452, Witten (DE); Nüsken, Axel, 58762, Altena (DE); Schulte, Martin, 58802, Balve (DE)
(74) Vertreter: Tersteegen, Felix

(56) Entgegenhaltungen:
- EP-A1- 0 684 158
- EP-A2- 1 584 517
- DE-A1- 4 142 599
- DE-U1- 20 201 528
- US-A- 5 072 545
- US-B1- 6 279 987

## Beschreibung

Die Erfindung betrifft eine Säulenblende, die eingerichtet ist, um Bereiche einer Fahrzeugkarosserie optisch abzudecken und mit ihren äußeren Sichtflächen das äußere Erscheinungsbild eines Fahrzeugs mitzugestalten, wobei die Säulenblende im bestimmungsgemäßen Endeinbauzustand eine Aufnahme für eine Funktionsdichtung, insbesondere eine Fensterfalldichtung, ausbildet.

Säulenblenden dieser Art sind unter anderem aus der EP 1 584 517 bekannt. Sie werden im Türbereich auf die Rohkarosserie aufgesetzt, um ein ansprechendes Erscheinungsbild des Fahrzeugs zu gewährleisten. Außerdem dienen Sie dazu, Funktionselemente wie Dichtungen aufzunehmen. Sie überbrücken sich konstruktionsbedingt zwischen benachbarten Karosserieteilen bildende Spalte und sorgen für eine möglichst ebene und somit luftwiderstands- und windgeräuscharme Fahrzeugaußenfläche. Dabei bilden die bekannten Säulenblenden im Endeinbauzustand entweder für sich genommen, oder, wie auch in der EP 1 584 517 gezeigt, zusammen mit angrenzenden Karosseriebereichen eine Aufnahme für die besagten Funktionsdichtungen aus. Bei diesen Funktionsdichtungen kann es sich insbesondere um Fensterfalldichtungen handeln.

Es ist erforderlich, dass die Übergänge vom Rand der Säulenblende zum Fenster bzw. zur angrenzenden Fahrzeugkarosserie durch optimal sitzende Dichtungen möglichst spaltfrei gestaltet sind. Zum einen dient dies der Erzeugung einer glatten Fahrzeugaußenfläche, die für einen geringen Luftwiderstandwert und die Vermeidung von Windgeräuschen notwendig ist, zum anderen ist dies für den stets angestrebten hohen Qualitätseindruck wichtig. Man versucht dies dadurch zu erreichen, dass Teile der Funktionsdichtungen die Randbereiche der Säulenblende, die konstruktions- und toleranzbedingt immer einen Spalt bildenden Abstand zur angrenzenden Fahrzeugaußenfläche haben, umgreifen und sich gleichzeitig bis zur Fahrzeugaußenfläche hin erstrecken. Der zwischen der Fahrzeugaußenfläche und der Säulenblende regelmäßig vorliegende Spalt wird so geschlossen.

Die von der Säulenblende zumindest mitgehaltenen Funktionsdichtungen sind hinsichtlich ihrer bestimmungsgemäßen Lage am Fahrzeug allerdings nicht der Säulenblende, sondern der Karosserie oder anderen Bauteilen zugeordnet und werden im Hinblick auf Lagetoleranzen und mögliche Maßnahmen zum Toleranzausgleich somit auch in Bezug auf diese Bauteile und nicht in Bezug auf die Säulenblende konstruiert und bemaßt. Beispielsweise ist eine Fensterfalldichtung, die den Randbereich eines Seitenfensters umgreift und dessen Gleiten entlang bzw. innerhalb der Dichtung beim Öffnen und Schließen des Seitenfensters zulässt, fest mit der oberseitigen Fensterdichtung, die im geschlossenen Zustand des Fensters dichtend an dessen Oberkante anliegt, verbunden. Die Maß- und Passtoleranzen dieser Weichkunststoffteile sind verhältnismäßig grob und betragen bis zu einigen Millimetern. Diese Teile sind zudem vordringlich derart zu konstruieren, dass die einwandfreie Bewegung und Abdichtung des Fensters auch in den Eckbereichen sowie eine optimale Einpassung in den Türrahmen gewährleistet ist. Auf die Säulenblende und deren Maß- und Passtoleranzen kann dabei kaum Rücksicht genommen werden.

Dies führt in vielen Fällen dazu, dass die genaue Lage bzw. Ausrichtung der Funktionsdichtung relativ zu der die Funktionsdichtung haltenden Säulenblende fehlerhaft ist. Je nach Art und Richtung der Fehlstellung kommt es zu unerwünschten Spaltbildungen oder Quetschungen der Funktionsdichtung. Diese können Windgeräusche verursachen, die Öffnungs- und Schließbewegung des Seitenfensters beeinträchtigen oder die Dichtheit der gesamten Fensterkonstruktion gefährden. Hinzu kommt, dass ein schwacher Qualitätseindruck entsteht, wenn die Funktionsdichtung und die Säulenblende nicht optisch einwandfrei zueinander ausgerichtet sind. Dies gilt insbesondere bei Säulenblenden, die, da sie im Türbereich angeordnet sind, sich bei jedem Ein- und Aussteigen im unmittelbaren Sichtfeld der Fahrzeugnutzer befinden. Der Eindruck, den eine fehlerhafte Ausrichtung verursacht, ist daher unbedingt zu vermeiden.

Ein weiteres Problem bildet der durch die beschriebene Fehlstellung verursachte Montagemehraufwand. Der Monteur, der bei der Fahrzeugproduktion eine solche Fehlstellung bemerkt, wird bemüht sein, diese zu beheben. Dies ist aufgrund der konstruktiven Komplexität des Gesamtsystems aus Tür, Karosserie, Säulenblende, Fenster und Dichtelementen nur schwierig zu bewerkstelligen und führt naturgemäß zu einer Verzögerung im Produktionsprozess.

Aufgabe der Erfindung ist es daher, eine Säulenblende zur Verfügung zu stellen, die einfach zu montieren ist und die Gefahr von Fehlstellungen der Funktionsdichtung relativ zur Säulenblende weitestgehend minimiert oder eine solche Fehlstellung zumindest optisch kaschieren kann. Negative Auswirkungen einer Fehlstellung auf die Funktion der Dichtung oder den Qualitätseindruck der montierten Baugruppe sollen vermieden werden.

Diese Aufgabe wird nach der Erfindung dadurch gelöst, dass der Säulenblende randseitig eine von der Lage der Funktionsdichtung funktional getrennte Decklippe ortsfest zugeordnet ist, die den zum Fahrzeugäußeren gewandten Randbereich der Funktionsdichtung im bestimmungsgemäßen Endeinbauzustand optisch zu verdecken vermag.

Hierdurch wird gewährleistet, dass eine Fehlstellung der hinsichtlich Ihrer Maß- und Passtoleranzen sich nicht an der Säulenblende orientierenden Funktionsdichtung für das optische und funktionelle Zusammenspiel zwischen Säulenblende und Funktionsdichtung nicht mehr erheblich ist. Die oben angesprochenen optischen oder funktionellen Beeinträchtigungen, die eine solche Fehlstellung bedingen könnte, werden weitestgehend ausgeschlossen. Bei der Montage wird der die Funktionsdichtung und/oder die Säulenblende montierende Facharbeiter eine nun quasi ausgeschlossene Fehlstellung nicht mehr kontrollieren müssen und auch keine aufwendigen Korrekturen einer Fehlstellung mehr vorzunehmen haben.

Der Begriff "ortsfest zugeordnet" soll in diesem Fall bedeuten, dass die Decklippe sich hinsichtlich ihrer Lage an der Säulenblende orientiert. Es handelt sich bei der Decklippe also um ein von der Lage der Funktionsdichtung funktional unabhängiges Element, dessen bestimmungsgemäße Sollposition relativ zur Säulenblende auch bei einem fehlerhaften Versatz der Funktionsdichtung relativ zur Säulenblende erhalten bleibt. Dabei kann die Decklippe auch Teil der Funktionsdichtung sein, solange die Verbindung zwischen der Decklippe und der Funktionsdichtung derart flexibel und/oder elastisch ist, dass eine relativ zur Säulenblende bestehende Fehlstellung der Funktionsdichtung die Position der Decklippe relativ zur Säulenblende nicht beeinträchtigt

Damit die Decklippe den zum Fahrzeugäußeren gewandten Randbereich der Funktionsdichtung optisch zu verdecken vermag, sollte die Decklippe nach Möglichkeit den zum Fahrzeugäußeren gewandten Randbereich der Funktionsdichtung übergreifen. Somit kann die Decklippe den Spalt zwischen dem Rand der Säulenblende und der unmittelbar angrenzende Fahrzeugaußenfläche überbrücken und schließen. Es entsteht ein weitestgehend sanfter und optisch ansprechender sowie strömungsgünstiger Übergang zwischen der Fahrzeugaußenfläche und der Säulenblendenoberfläche.

Bei der beschriebenen Ausgestaltung kann insbesondere vorgesehen sein, dass die Decklippe Teil eines von der Funktionsdichtung separaten Dichtbandes ist, das fest mit der Säulenblende verbunden ist. Dabei sind das Dichtband und die Säulenblende bevorzugt miteinander verklebt. An dieser Stelle sei aber erwähnt, dass das Dichtband selbst nur die Aufgabe hat, die Decklippe auszubilden und eine Möglichkeit zu bieten, diese als in der Regel sehr schmales, längliches Bauteil mit der Säulenblende fest zu verbinden. Eine Dichtfunktion gegenüber einem anderen Bauteil muss das Dichtband dabei nicht zwingend erfüllen.

Eine weitere Möglichkeit besteht darin, dass die Decklippe unmittelbar an der Säulenblende angespritzt ist. Dies kann beispielsweise dadurch erreicht werden, dass seitlich des noch im Spritzgusswerkzeug befindlichen Säulenblenderahmens durch Ziehen eines Werkzeugkerns oder durch Wechsel einer Werkzeugbacke im Anschluss an den den Säulenblendenrahmen herstellenden Spritzgussvorgang ein neuer Hohlraum für die Decklippe freigemacht wird, in den dann das die Decklippe ausbildende Material eingespritzt wird.

Dabei wird die Decklippe bevorzugt aus einem sich vom Material der Säulenblende unterscheidenden Weichkunststoff hergestellt. Bevorzugt wird ein Weichkunststoff, wie er auch für Funktionsdichtungen jeglicher Art eingesetzt wird. Diese Auswahl erweckt zusammen mit der aufgrund der festen Zuordnung der Decklippe zur Säulenblende optimalen Ausrichtung der Bauteile den optischen Eindruck einer perfekt sitzenden Dichtung und damit den einer besonders hohen Verarbeitungsqualität. Unter anderem aus dem gleichen Grund kann vorgesehen sein, dass die Decklippe nach Art einer Dichtungslippe der Funktionsdichtung ausgeführtist.

Die vorstehenden Ausführungsvarianten haben außerdem den Vorteil, dass die Decklippe bei einer solchen Materialwahl und Konstruktion auch Dichtfunktionen übernehmen kann. Selbst wenn diese, wie es bevorzugt vorgesehen ist, derart mit der Säulenblende verbunden und an dieser positioniert ist, dass die der Fensterscheibe zugewandte Kante der Decklippe in einem Abstand im Wesentlichen parallel zur Fensterscheibenoberfläche verläuft, kann die Decklippe neben der optischen Aufwertung zumindest eine die Funktionsdichtung vor Grobschmutz schützende Funktion übernehmen. Der Abstand zur Fensterscheibenoberfläche liegt bevorzugt zwischen wenigen zehntel Millimetern bis wenigen Millimetern und sollte 2 Millimeter nicht übersteigen. Als besonders geeignet wird ein Abstand zwischen einem halben und einem Millimeter angesehen. Hierdurch ist ein quasi spaltfreier Übergang von der Fensterscheibenoberfläche zur Säulenblendenoberfläche gewährleistet.

Ein weiterer Vorteil der Verwendung von den angesprochenen Weichkunststoffen für die Decklippe ist, dass eine hiermit hergestellte Decklippe auch als Toleranzausgleich dienen kann. Bei Kontakt mit der Fensterscheibe oder der Karosserie kann diese einfedern oder eingedrückt werden, ohne dass es zu Beschädigungen der Säulenblende bzw. des Fensters oder der Karosserie kommen kann und insbesondere auch ohne dass durch die Berührung unerwünschte Geräusche entstehen.

Weitere Merkmale und Vorteile der Erfindung ergeben sich der nachfolgenden Beschreibung bevorzugter Ausführungsbeispiele anhand der Zeichnungen. In den Zeichnungen zeigt:
Figur 1 eine aus dem Stand der Technik bekannte Anordnung einer an einem Holm einer Fahrzeugkarosserie verschraubten Säulenblende einschließlich der dieser Konstruktion zugeordneten Fensterfalldichtung,
Figur 2 in stark vereinfachter Darstellung die Sollstellung der mit einer horizontalen Türdichtung verbundenen Fensterfalldichtung relativ zur Säulenblende,
Figuren 3a bis 4b erfahrungsgemäß auftretende Fehlstellungen der in Figur 2 und Figur 1 gezeigten Anordnung gemäß dem Stand der Technik.
Figur 5 eine erste Ausgestaltung einer Säulenblende mit daran unmittelbar angespritzter Decklippe,
Figur 6 eine zweite Ausgestaltung einer Säulenblende mit damit verklebter Decklippe, und
Figur 7 eine dritte Ausgestaltung einer Säulenblende mit einem daran angesetzten, von der Fensterfalldichtung unabhängigen Dichtband mit Decklippe.

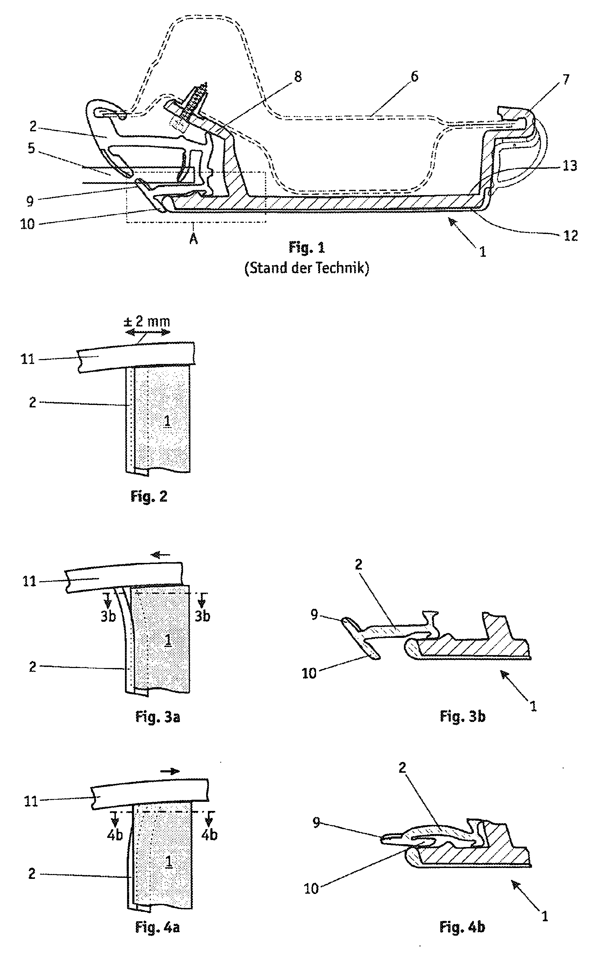

In Figur 1 ist eine aus dem Stand der Technik bekannte Anordnung einer an einem Holm 6 einer Fahrzeugkarosserie verschraubten Säulenblende 1 einschließlich der dieser Konstruktion zugeordneten Fensterfalldichtung 2 gezeigt. Die Säulenblende 1 umgreift mit einem U-förmig ausgebildeten Haltesteg 7 die die Außenkante des Holms 6 bildenden Karosseriebleche und ist über einen Fixiersteg 8 mit dem Karosserieholm 6 verschraubt. Die Innenseite der Säulenblende 1, der Fixiersteg 8 und der Karosserieholm 6 bilden eine Aufnahme für eine Fensterfalldichtung 2, in der die Fensterscheibe 5 geführt ist.

An der zum Fahrzeugäußeren gewandten Seite weist die Fensterfalldichtung 2 einen T-förmig ausgebildeten Bereich mit einer Dichtlippe 9 auf, die von dem der Fensterscheibe 5 zugewandten Horizontalschenkel des T-förmigen Bereichs gebildet ist. Der gegenüberliegende, zum Fahrzeugäußeren gerichtete Horizontalschenkel des T-förmigen Bereichs bildet eine Haltelippe 10 aus, die den äußeren Rand der Säulenblende 1 umgreift. Der konstruktionsbedingte Spalt zwischen der Säulenblende 1 und der Fensterscheibe 5 ist dadurch optisch geschlossen, gegen eindringendes Wasser geschützt und gewährleistet außerdem einen strömungsgünstigen Übergang zwischen Fensterscheibe 5 und der Säulenblendenaußenfläche.

Figur 2 zeigt in einer stark vereinfachten Darstellung die Seitenansicht der in Figur 1 dargestellten Konstruktion. Die Säulenblende 1 und die Fensterfalldichtung 2, die an ihrem oberseitigen Ende mit einer im wesentlichen horizontal verlaufenden Türrahmendichtung 11 (in Figur 1 nicht dargestellt) verbunden ist, sind optimal zueinander ausgerichtet. Die sichtbaren Außenkanten der Fensterfalldichtung 2 verlaufen über die gesamte Länge der Säulenblende 1 parallel zu den Säulenblendenaußenkanten.

Türrahmendichtung 11 und Fensterfalldichtung 2 sind aus elastischem Weichkunststoff hergestellt und bilden schmale, längliche Bauteile, deren Maß- und Passtoleranzen nur relativ grob eingehalten werden können. Durch die dem Material innewohnende Elastizität sind Ungenauigkeiten beim Einbau kaum zu vermeiden. Hinzu kommen Maß- und Passtoleranzen bei der Säulenblende selbst. Hinsichtlich der Lage der Fensterfalldichtung 2 zur Säulenblende 1 sind Toleranzen von circa ± 2 mm regelmäßig zu erwarten. Dies führt nicht selten zu den in Figuren 3a und 3b bzw. den in Figuren 4a und 4b gezeigten Fehlstellungen der Fensterfalldichtung 2 relativ zur Säulenblende 1.

Figur 3a zeigtin Anlehnung an die Figur 2 eine im oberen Bereich der Säulenblende um wenige Millimeter zu weit links befindliche Fensterfalldichtung 2, Figur 4a eine um wenige Millimeter zu weit rechts befindliche Fensterfalldichtung 2. Diese Fehlstellungen resultieren dabei hauptsächlich aus einem ungewollten Versatz der Türrahmendichtung 11, deren absolut positionsgenauer Einbau aus den genannten Gründen schwierig ist.

Figuren 3b und 4b, die dem in Figur 1 dargestellten Ausschnitt A entsprechen, zeigen den sich aus diesen Fehlstellungen regelmäßig ergebenden fehlerhaften Sitz der Säulenblende 1 und der Fensterfalldichtung 2 zueinander gemäß der in Figuren 3a und 4a eingezeichneten Schnittlinien. Erkennbar bildet sich zwischen der Säulenblende 1 und der Fensterfalldichtung 2 ein ungewollter Spalt (Figur 3b) oder die Fensterfalldichtung 2 wird hinter die Säulenblende gezogen (Figur 4b). In beiden Fällen ist der korrekte Sitz der Funktionsdichtung 2 nicht gewährleistet und die eingangs erwähnten Probleme treten auf.

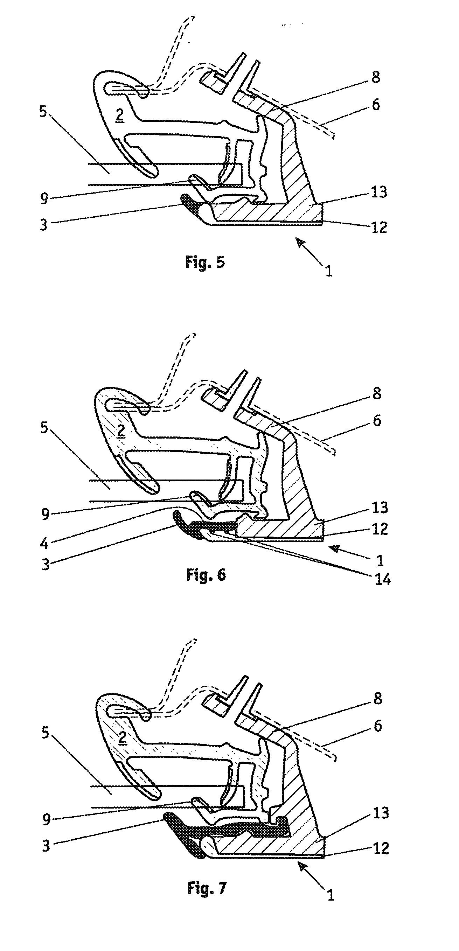

Figur 5 zeigt eine erste mögliche Ausgestaltung, das vorstehend beschriebene Problem zu vermeiden. Der zum Fahrzeugäußeren gerichtete Bereich der Fensterfalldichtung 2 ist verkürzt und hinter die Säulenblende zurückgezogen. Die in Figur 1 noch den äußeren Rand der Säulenblende 1 umgreifende Haltelippe 10 ist weggefallen. An deren Stelle ist eine unmittelbar an die Säulenblende 1 strömungsgünstig angeformte Decklippe 3 vorgesehen, die die Dichtlippe 9 optisch verdeckt. Die Decklippe 3 berührt dabei die Fensterscheibe 5 nicht, erfüllt eine Dichtfunktion also nur im Hinblick auf Grobschmutz. Alternativ kann aber auch vorgesehen sein, dass die Decklippe 3 nach Art der Dichtlippe 9 ausgeführt ist, bis auf die Scheibenoberfläche ragt und eine vollwertige Dichtung bildet.

Entscheidend ist, dass nun eine Fehlstellung der Funktionsdichtung 2 keine äußerlich erkennbaren Auswirkungen mehr hat. Unabhängig von dem in den Figuren 3a/b und 4a/b dargestellten Fehlstellungen der Funktionsdichtung 2 ist ein einwandfreier optischer Eindruck gewährleistet und durch die Fehlstellung bedingte Probleme während der Fahrzeugnutzung sind weitestgehend ausgeschlossen.

Figur 6 zeigt eine alternative Möglichkeit, eine Decklippe 3 an der Säulenblende 1 anzuordnen. Hier ist die Decklippe 2 nicht unmittelbar an der Säulenblende 1 angespritzt, sondern mit dieser verklebt. Dabei dringt die Decklippe 2 mit kleinen Haltefortsätzen 14 in Ausnehmungen auf der Innenseite der Säulenblende 1 ein, um einen noch sichereren Halt zu gewährleisten. Figur 7 zeigt eine weitere mögliche Ausgestaltung einer von der Funktionsdichtung 2 getrennten Decklippe 3, bei der die Decklippe 3 Teil eines gummikederartigen Dichtbandes 4 ist, dass in die Säulenblende 1 eingesetzt ist. An einer Seite hintergreift das Dichtband 4 einen am Fixiersteg 8 ausgebildeten Haltekragen und an der anderen Seite den Rand der Säulenblende 1. Nachteil an der in Figur 7 dargestellten Ausführungsform ist allerdings, dass hierbei die Funktionsdichtung 2 und das Dichtband 4 eine verhältnismäßig große Bauhöhe erfordern, was jedoch dadurch zumindest zum Teil vermieden werden kann, das die Funktionskunststoffschicht in diesem Bereich weggelassen oder deutlich dünner ausgeführt wird.

Die in den Figuren dargestellte Säulenblende 1 ist darüber hinaus erkennbar mehrschichtig aufgebaut. Außenseitig, also an der vom Fahrzeug wegweisenden Oberfläche, ist die Säulenblende 1 von einer Sichtkunststoffschicht 12 gebildet. Diese bildet die im montierten Zustand den optischen Eindruck prägende Oberfläche, die aus ästhetischen Gesichtspunkten über die gesamte Lebensdauer des Fahrzeugs einen möglichst hochwertigen Eindruck machen soll und daher aus eher harten, kratzfesten Kunststoffen hergestelltist. Die innere Schicht der Säulenblende 1, die zum Fahrzeugholm 6 hin weist und im montierten Zustand der Säulenblende 1 von außen nicht erkennbar ist, ist von einer Funktionskunststoffschicht 13 gebildet. Der für diese Schicht verwendete Kunststoff erfordert Materialeigenschaften, die sich mit den für die Sichtkunststoffschicht benötigten nicht gut vereinbaren lassen. Daher ist die Funktionskunststoffschicht 13 mit einem Kunststoff hergestellt, der eher duktile bzw. zähelastische Eigenschaften aufweist. Wie aus den Figuren erkennbar ist die Decklippe 2 bevorzugt an der Sichtkunststoffschicht angeordnet oder, wie in Figur 5, unmittelbar an dieser angespritzt. Die beiden Schichten der Säulenblende werden bevorzugt im gleichen Spritzgusswerkzeug ausgeformt.

### Bezugszeichenliste

- 1: Säulenblende
- 2: Funktionsdichtung
- 3: Decklippe
- 4: Dichtband
- 5: Fensterscheibe
- 6: Karosserieholm
- 7: Haltesteg
- 8: Fixiersteg
- 9: Dichtlippe
- 10: Haltelippe
- 11: Türrahmendichtung
- 12: Sichtkunststoffschicht
- 13: Funktionskunststoffschicht
- 14: Haltefortsätze

## Patentansprüche

1. Säulenblende (1), die eingerichtet ist, um Bereiche einer Fahrzeugkarosserie optisch abzudecken und mit ihren äußeren Sichtflächen das äußere Erscheinungsbild eines Fahrzeugs mitzugestalten, wobei die Säulenblende (1) im bestimmungsgemäßen Endeinbauzustand eine Aufnahme für eine Funktionsdichtung (2), insbesondere eine Fensterfalldichtung, ausbildet, **dadurch gekennzeichnet, dass** der Säulenblende (1) randseitig eine von der Lage der Funktionsdichtung (2) funktional getrennte Decklippe (3) ortsfest zugeordnet ist, die den zum Fahrzeugäußeren gewandten Randbereich der Funktionsdichtung (2) optisch zu verdecken vermag.

2. Säulenblende nach Anspruch 1 oder 2, **dadurch gekennzeichnet, dass** die Decklippe (3) den zum Fahrzeugäußeren gewandten Randbereich der Funktionsdichtung (2) übergreift.

3. Säulenblende nach einem der Ansprüche 1 bis 2, **dadurch gekennzeichnet, dass** die Decklippe (3) den Spalt zwischen dem Rand der Säulenblende und der unmittelbar angrenzenden Fahrzeugaußenfläche überbrückt.

4. Säulenblende nach einem der Ansprüche 1 bis 3, **dadurch gekennzeichnet, dass** die Decklippe (3) Teil der Funktionsdichtung (2) ist und mit der Funktionsdichtung (2) derart flexibel verbunden ist, dass eine relativ zur Säulenblende (1) bestehende Fehlstellung der Funktionsdichtung (2) die Position der Decklippe (3) relativ zur Säulenblende (1) nicht beeinträchtigt.

5. Säulenblende nach einem der vorhergehenden Ansprüche, **dadurch gekennzeichnet, dass** die Decklippe (3) Bestandteil eines von der Funktionsdichtung (2) separaten Dichtbandes (4) ist, dass fest mit der Säulenblende (1) verbunden ist.

6. Säulenblende nach einem der Ansprüche 1 bis 4, **dadurch gekennzeichnet, dass** die Decklippe (3) unmittelbar an der Säulenblende (1) angespritzt ist.

7. Säulenblende (1) nach einem der vorhergehenden Ansprüche, **dadurch gekennzeichnet, dass** die Decklippe (3) aus einem sich vom Material der Säulenblende (1) unterscheidenden Weichkunststoff hergestellt ist.

8. Säulenblende nach einem der vorhergehenden Ansprüche, **dadurch gekennzeichnet, dass** die Decklippe (3) nach Art einer Dichtungslippe der Funktionsdichtung (2) ausgeführt ist.

9. Säulenblende nach einem der vorhergehenden Ansprüche, **dadurch gekennzeichnet, dass** die Decklippe (3) derart mit der Säulenblende (1) verbunden und an dieser positioniert ist, dass die einer Fensterscheibe (5) zugewandte Kante der Decklippe (3) in einem Abstand im Wesentlichen parallel zur Fensterscheibenoberfläche verläuft.

## Claims

1. A pillar finisher (1), which is arranged to visually cover regions of a vehicle body and with its outer visible surfaces to be involved in configuring the external appearance of a vehicle, wherein the pillar finisher (1) in the intended final installed state forms a mount for a functional seal (2), in particular a window drop seal, **characterized in that**
a covering lip (3), functionally separate from the position of the functional seal (2), is fixedly associated with the pillar finisher (1), which covering lip is able to visually conceal the edge region of the functional seal (2) facing towards the exterior of the vehicle.

2. The pillar finisher according to Claim 1 or 2, **characterized in that** the covering lip (3) engages over the edge region of the functional seal (2) facing towards the exterior of the vehicle.

3. The pillar finisher according to one of Claims 1 to 2, **characterized in that** the covering lip (3) bridges the gap between the edge of the pillar finisher and the immediately adjoining outer surface of the vehicle.

4. The pillar finisher according to one of Claims 1 to 3, **characterized in that** the covering lip (3) is part of the functional seal (2) and is flexibly connected with the functional seal (2) such that a malposition of the functional seal (2) existing relative to the pillar finisher (1) does not impair the position of the covering lip (3) relative to the pillar finisher (1).

5. The pillar finisher according to one of the preceding claims, **characterized in that** the covering lip (3) is a component of a sealing strip (4), separate from the functional seal (2), which is securely connected with the pillar finisher (1).

6. The pillar finisher according to one of Claims 1 to 4, **characterized in that** the covering lip (3) is injected directly on the pillar finisher (1).

7. The pillar finisher (1) according to one of the preceding claims, **characterized in that** the covering lip (3) is produced from a soft plastic which differs from the material of the pillar finisher (1).

8. The pillar finisher according to one of the preceding claims, **characterized in that** the covering lip (3) is embodied in the manner of a sealing lip of the functional seal (2).

9. The pillar finisher according to one of the preceding claims, **characterized in that** the covering lip (3) is connected with the pillar finisher (1) and is positioned thereon such that the edge of the covering lip (3) facing a window pane (5) runs at a distance substantially parallel to the surface of the window pane.

## Revendications

1. Diaphragme de colonne (1), qui est conçu afin de recouvrir optiquement des zones d'une carrosserie du véhicule et de participer par ses surfaces visuelles extérieures à l'aspect extérieur d'un véhicule, dans lequel le diaphragme de colonne (1) en l'état de montage final approprié constitue un réceptacle d'un joint d'étanchéité fonctionnel (2), notamment d'un joint d'étanchéité empêchant la chute d'une fenêtre, **caractérisé en ce que** le diaphragme de colonne (1) est coordonné de manière stationnaire sur ses bords à une lèvre de couverture (3) fonctionnelle séparée de la position du joint d'étanchéité fonctionnel, qui contribue à recouvrir optiquement la zone de bord tournée vers l'extérieur du véhicule du joint d'étanchéité fonctionnel.

2. Diaphragme de colonne selon les revendications 1 ou 2, **caractérisé en ce que** la lèvre de couverture (3) empiète sur la zone de bord tournée vers l'extérieur du véhicule du joint d'étanchéité fonctionnel (2).

3. Diaphragme de colonne selon une des revendications 1 à 2, **caractérisé en ce que** la lèvre de couverture (3) enjambe l'espace vide entre le bord du diaphragme de colonne et la surface extérieure de véhicule directement contiguë.

4. Diaphragme de colonne selon une des revendications 1 à 3, **caractérisé en ce que** la lèvre de couverture (3) fait partie du joint d'étanchéité fonctionnel (2) et est reliée au joint d'étanchéité fonctionnel (2) de telle sorte qu'une position erronée du joint d'étanchéité fonctionnel (2) par rapport au diaphragme de colonne (1) n'affecte pas la position de la lèvre de couverture (3) par rapport au diaphragme de colonne (1).

5. Diaphragme de colonne selon une des revendications précédentes, **caractérisé en ce que** la lèvre de couverture (3) est partie intégrante d'une bande d'étanchéité (4) séparée du joint d'étanchéité fonctionnel (4), qui est solidement reliée au diaphragme de colonne (1).

6. Diaphragme de colonne selon une des revendications 1 à 4, **caractérisé en ce que** la lèvre de couverture (3) est injectée directement sur le diaphragme de colonne (1).

7. Diaphragme de colonne (1) selon une des revendications précédentes, **caractérisé en ce que** la lèvre de couverture (3) est fabriquée dans un plastique tendre différant du matériau du diaphragme de colonne (1).

8. Diaphragme de colonne (1) selon une des revendications précédentes, **caractérisé en ce que** la lèvre de couverture (3) est conçue à la manière d'une lèvre de joint d'étanchéité du joint d'étanchéité fonctionnel (2).

9. Diaphragme de colonne selon une des revendications précédentes, **caractérisé en ce que** la lèvre de couverture (3) est reliée au diaphragme de colonne (1) et positionnée sur celui-ci de telle sorte que l'arête tournée vers une vitre de fenêtre (5) de la lèvre de couverture (3) s'étende à un espacement essentiellement parallèlement à la surface de vitre de fenêtre.
